# EUROPÄISCHE PATENTSCHRIFT

(11) **EP 3 129 248 B1**
(45) Veröffentlichungstag und Bekanntmachung des Hinweises auf die Patenterteilung: **23.12.2020**
(21) Anmeldenummer: 15709481.4
(22) Anmeldetag: 12.03.2015
(51) Int. Cl.: B60K 6/40, F16H 57/04, H02K 7/00, B60K 6/48, F16C 33/66, F16C 19/30

(54) **DREHMOMENTÜBERTRAGUNGSANORDNUNG UND ANTRIEBSMODUL DAMIT**
TORQUE TRANSMISSION ARRANGEMENT, AND DRIVE MODULE COMPRISING SAME
ENSEMBLE DE TRANSMISSION DE COUPLE ET MODULE D'ENTRAÎNEMENT ÉQUIPÉ D'UN TEL ENSEMBLE

(30) Priorität: 09.04.2014 DE 102014206844
(43) Veröffentlichungstag der Anmeldung: 15.02.2017
(73) Patentinhaber: ZF Friedrichshafen AG, 88046 Friedrichshafen (DE)
(72) Erfinder: CUDOK, Matthias, 98617 Ritschenhausen (DE); REUTER, Klaus, 97723 Oberthulba (DE); VNUK, Tomas, 97422 Schweinfurt (DE)
(74) Vertreter: ZF Friedrichshafen AG
(86) Internationale Anmeldenummer: PCT/EP2015/055123
(87) Internationale Veröffentlichungsnummer: WO 2015/154937

(56) Entgegenhaltungen:
- WO-A1-2013/118902
- DE-A1-102005 011 849
- DE-A1-102005 011 849
- FR-A- 1 410 738
- FR-A- 1 410 738
- JP-A- 2007 187 214
- JP-A- 2007 187 214
- US-A- 4 725 153
- US-A- 4 725 153
- US-A- 4 968 157
- US-A- 4 968 157
- US-A1- 2007 225 098
- US-A1- 2012 242 199

## Beschreibung

Die vorliegende Erfindung betrifft eine Drehmomentübertragungsanordnung, insbesondere für eine Anordnung mit einer elektrischen Maschine in einem Antriebsmodul eines Hybridfahrzeugs oder Elektrofahrzeugs, zur Übertragung eines Drehmoments von einer Abtriebswelle, insbesondere einer Motorabtriebswelle, auf eine Antriebswelle, insbesondere eine Getriebeeingangswelle, wobei die Antriebswelle weiterhin mindestens einen Fluidführungskanal aufweist, in dem ein Fluid in Richtung Abtriebswelle führbar ist und wobei die Drehmomentübertragungsvorrichtung in einem Bereich radial außerhalb der Abtriebswelle einen Torsionsschwingungsdämpfer aufweist.

Drehmomentübertragungsanordnungen der oben genannten Art, insbesondere für eine Anordnung mit einer elektrischen Maschine in einem Antriebsmodul sind aus dem Stand der Technik bekannt. Beispielsweise wird in der DE 10 2011 078 110 A1 ein Antriebsmodul beschrieben, wobei ein Verbrennungsmotor und eine Elektromaschine über eine Kupplungsvorrichtung in Abhängigkeit von der gewünschten Fahrstrategie miteinander verbunden bzw. getrennt werden. Bei geschlossener Kupplung kann ein Drehmoment vom Verbrennungsmotor über den Kupplungseingang auf den Kupplungsausgang und von dort auf eine als Getriebeeingangswelle eines nachfolgenden Getriebes ausgebildete Antriebswelle übertragen werden, während beim Elektromotorbetrieb ein Antrieb der Getriebeeingangswelle über den mit dem Kupplungsausgang drehfest verbundenen Rotor der Elektromaschine erfolgen kann. Zur Schwingungsreduzierung sind darüber hinaus die mit der Kurbelwelle des Verbrennungsmotors drehfest verbundene Abtriebswelle und der Kupplungseingang über einen Torsionsschwingungsdämpfer miteinander verbunden. Des Weiteren weist das aus dem Stand der Technik bekannte Antriebsmodul eine Rotornabe auf, die ebenfalls fest mit dem Rotor der Elektromaschine und über eine Mitnehmerverzahnung unter Einbeziehung einer separaten Zwischenwelle mit einer Getriebeeingangswelle verbunden ist. Dadurch kann die Rotornabe über den Rotor oder bei geschlossener Kupplung zusätzlich über den Verbrennungsmotor angetrieben werden. Dabei ist die Rotornabe koaxial zu der Abtriebswelle angeordnet und ist gegenüber dieser radial und axial gelagert.

Nachteilig bei diesem Stand der Technik ist jedoch, dass ein über die Getriebeeingangswelle und die als Welle ausgeführte Rotornabe in bekannter Weise eingebrachtes Kühl-, Schmier- und Betätigungsfluid, insbesondere ein Öl, zwar zur Kühlung, Schmierung und zur Betätigung der Kupplung ausreicht, jedoch ein radial außerhalb der Abtriebswelle angeordneter Torsionsschwingungsdämpfer nicht ausreichend gekühlt bzw. geschmiert werden kann.

Die US 2012/0242199 A1 offenbart eine weitere Drehmomentübertragungsanordnung der zuvor genannten Art.

Mit der DE 10 2005 011 849 A1 ist ein Hybridantrieb bekannt geworden mit einem Verbrennungsmotor mit einer als Kurbelwelle ausgebildeten Abtriebswelle und einem elektrisch variablen Getriebe, welches über eine Antriebswelle eine Antriebsleistung des Verbrennungsmotors aufnehmen und an Fahrzeugräder übertragen kann. In dem zwischen dem Motor und dem Getriebe verlaufenden Drehmomentübertragungsweg ist zur Dämpfung von Torsionsschwingungen ein Torsionsdämpfer angeordnet, der in Abhängigkeit von einem Betriebszustand des Hybridantriebs mittels einer Lockout-Kupplung überbrückt werden kann und der dadurch temporär außer Kraft gesetzt werden kann. Die Lockout-Kupplung ist innerhalb eines den Torsionsdämpfer fluiddicht umgebenden Gehäuses mit zwei Gehäuseschalen als nasslaufende Kupplung ausgeführt und wird über zwei Fluidkreisläufe, die abschnittweise innerhalb der Antriebswelle ausgebildet sind, betätigt. Die Übertragung eines Drehmoments von der Kurbelwelle auf den Torsionsdämpfer erfolgt über ein Übertragungselement in Form einer Flexplate, welches in einem der Drehachse radial entfernten bzw. radial außen liegenden Bereich des Torsionsdämpfers26 mit einem ringscheibenförmigen Übertragungsflansch verschraubt ist. Dieser Flansch ist in dem genannten Bereich mit dem Gehäuse verbunden.

Aufgabe der vorliegenden Erfindung ist es deshalb, eine Drehmomentübertragungsanordnung bereitzustellen, die eine optimierte Fluidführung und Schmierung für einen radial außerhalb der Abtriebswelle angeordneten Torsionsschwingungsdämpfer ohne zusätzliche Bauraum- und Kostenaufwände bereitstellt.

Diese Aufgabe wird durch eine Drehmomentübertragungsanordnung gemäß Patentanspruch 1 gelöst.

Gemäß der Erfindung wird eine gattungsgemäße Drehmomentübertragungsanordnung bereitgestellt, welche sich gegenüber dem Stand der Technik dadurch auszeichnet, dass an der Abtriebswelle ein Fluidleitelement vorgesehen ist, das Fluid aus dem Fluidführungskanal der Antriebswelle in einen Bereich radial außerhalb der Abtriebswelle führt und dass das von dem Fluidleitelement aus dem Fluidführungskanal der Antriebswelle in den Bereich radial außerhalb der Abtriebswelle geführte Fluid in einen Innenraum des Torsionsschwingungsdämpfers, insbesondere in einen Federraum mit Dämpferfedern führbar ist. Dabei handelt es sich bei dem Fluid vorzugsweise um ein Kühl- und/oder Schmierfluid, insbesondere ein Öl, mit dem Teile der Drehmomentübertragungsanordnung gekühlt, geschmiert und/oder betätigt werden können.

Gemäß einem weiteren vorteilhaften Ausführungsbeispiel ist die Abtriebswelle als Hohlwelle ausgebildet, und ein Innenraum der Abtriebswelle ist dazu ausgelegt ist, das Fluid aufzunehmen und/oder zu führen. Aufgrund dieser Ausgestaltung kann sichergestellt werden, dass das Fluid aus dem Fluidführungskanal der Antriebswelle in Richtung des Fluidleitelements an der Abtriebswelle geleitet wird.

Dabei kann die Antriebswelle weiterhin von mindestens einer weiteren als Hohlwelle ausgebildeten Welle, insbesondere einer Rotornabe, umgeben sein. Vorzugsweise kann sich die weitere Welle in die als Hohlwelle ausgebildete Abtriebswelle erstrecken, so dass vorteilshafterweise der fluidaufnehmende Innenraum der Abtriebswelle als Ringraum zwischen Abtriebswelle und der weiteren Welle ausgebildet ist. Dadurch wird eine Fluidführung bereitgestellt, mit der Fluid aus der Antriebswelle durch die weitere Welle hindurch in einen Raum zwischen der weiteren Welle und der Abtriebswelle führbar ist. Dazu ist insbesondere der Innenraum der weiteren Welle in fluidischer Verbindung zu dem Fluidführungskanal der Antriebswelle und dem fluidaufnehmenden Innenraum der Abtriebswelle ausgebildet.

Hierbei sei insbesondere erwähnt, dass das Fluidleitelement auch ohne die Anordnung einer weiteren Welle, wie beispielsweise einer Rotornabe verwendet werden kann.

Gemäß einem weiteren vorteilhaften Ausführungsbeispiel ist das Fluidleitelement als Fluiddurchgangskanal durch die Abtriebswelle ausgebildet. Dabei ist vorzugsweise der Fluiddurchgangskanal derart ausgebildet, dass er den fluidaufnehmenden Innenraum der Abtriebswelle mit dem Bereich radial außerhalb der Abtriebswelle fluidisch verbindet.

Durch diesen Fluiddurchgangskanal kann Fluid direkt aus dem Innenraum in Richtung des Bereichs radial außerhalb der Abtriebswelle geführt werden.

Gemäß einem weiteren vorteilhaften Ausführungsbeispiel ist an einem abtriebsseitigen Ende der Abtriebswelle eine im Wesentlichen radial angeordnete Lageranordnung mit einem ersten und einem zweiten sich im Wesentlichen radial erstreckenden Lagerring angeordnet. Dabei ist der erste Lagerring vorzugsweise drehfest mit der Abtriebswelle verbunden, während der zweite Lagerring drehfest mit einem sich nicht mit der Abtriebswelle drehenden Element der Drehmomentübertragungsanordnung verbunden ist. Diese Lageranordnung sorgt vorteilhafterweise für eine axial Abstützung der Abtriebswelle bzw. für eine axiale Abstützung eines neben der Abtriebswelle angeordneten Elements der Drehmomentübertragungsanordnung.

Dabei ist insbesondere bevorzugt, wenn einer der Lagerringe als Fluidleitelement ausgebildet ist, d.h., dass Fluid von dem Innenraum der Abtriebswelle durch das Lager hindurch zu dem Bereich radial außerhalb der Abtriebswelle geführt werden kann. Dabei weist mindestens einer der Lagerringe an seinem radial außen angeordneten Bereich eine Abkröpfung auf, die das durch das Lager strömende Fluid in Richtung des Bereichs radial außerhalb der Abtriebswelle leitet. Dadurch kann Fluid, das aus dem Lager austritt, nicht nur ungeleitet nach radial außen geschleudert werden, sondern kann mithilfe der Abkröpfung zu einem speziellen Einsatzort geleitet werden.

Um das Lager für eine optimierte Fluidleitung korrekt anzuordnen, ist weiterhin an dem Lager, insbesondere an einem der Lagerringe eine Verdrehsicherung angeordnet. Diese Verdrehsicherung ist vorzugsweise radial innen ausgebildet und kann mit einem entsprechenden Gegenstück an der Abtriebswelle und/oder dem sich nicht mit der Abtriebswelle drehenden Element der Drehmomentübertragungsanordnung gelagert sein.

Durch die Fehlmontagesicherung ist gewährleistet, dass das Lager in der richtigen Orientierung eingebaut wird, so dass nicht eventuell das Fluidleitelement, insbesondere die Abkröpfung das durch das Lager tretende Fluid in eine ungewünschte Richtung ablenkt.

Gemäß einem weiteren vorteilhaften Ausführungsbeispiel ist zwischen Lagervorrichtung und Abtriebswelle eine Abstandsscheibe angeordnet. Diese Abstandsscheibe dient insbesondere dazu, das Lager bzw. den antriebsseitigen Lagerring der Lagervorrichtung einfach an der Abtriebswelle zu befestigen. Zum anderen können mittels dieser Abstandsscheibe Bauraumunterschiede ausgeglichen werden.

Um eine besonders gute Fluidführung in den Bereich radial außerhalb der Abtriebswelle zu erreichen, kann zudem diese Abstandsscheibe mindestens eine Fluidführungsnut aufweisen, die eine fluidische Verbindung zwischen dem Innenraum der Abtriebswelle und dem radial äußeren Bereich bereitgestellt. Über die Tiefe der Nuten kann dabei vorzugsweise die Menge des zu transportierenden Fluids eingestellt werden. Da die Abstandsscheibe meistens ein Kunststoffelement ist, ist zudem eine Ausbildung einer Nut besonders einfach möglich. Dadurch kann ein besonders einfaches und kostengünstiges Fluidleitelement geschaffen werden.

Darüber hinaus kann die Fluidführungsnut hinsichtlich einer radialen Ausrichtung um einen Winkel α angestellt sein. Dadurch kann vorteilhafterweise sichergestellt werden, dass das Fluid auch bei der zu erwartenden Drehung der Abstandsscheibe zuverlässig in Richtung des Bereichs radial außerhalb der Abtriebswelle geführt werden kann.

Gemäß einem weiteren vorteilhaften Ausführungsbeispiel erstreckt sich die Abstandscheibe axial zumindest teilweise über die Antriebswelle und/oder teilweise über die Lagervorrichtung. Dabei ist die axiale Erstreckung vorzugsweise als Befestigungsmittel, insbesondere als Schnappelement, zur Befestigung der Abstandsscheibe an der Abtriebswelle und/oder der Lagervorrichtung ausgebildet. Die axialen Erstreckungen ermöglichen es dabei, in einfacher Weise die Abstandsscheibe an der Abtriebswelle bzw. der Lagervorrichtung zu befestigten. Ist die axiale Erstreckung über beide Elemente, also die Abtriebswelle und die Lagervorrichtung ausgebildet, so sind sowohl die Abtriebswelle als auch die Lagervorrichtung lösbar mit der Abstandsscheibe verbindbar. Alternativ kann selbstverständlich auch die Abstandsscheibe fest mit der Abtriebswelle und/oder der Lagervorrichtung, beispielsweise über Kleben verbunden sein. Selbstverständlich ist es auch möglich, die Abstandsscheibe an einer Seite fest mit dem jeweiligen Element zu verbinden und auf der anderen Seite eine axiale Erstreckung als Befestigungsmittel vorzusehen. Ebenfalls ist es selbstverständlich möglich, die axiale Erstreckung auch ohne Befestigungselement auszubilden.

Gemäß einem weiteren vorteilhaften Ausführungsbeispiel weist die Drehmomentübertragungsanordnung in dem Bereich radial außerhalb der Abtriebswelle mindestens eine vorzugsweise nasslaufende Kupplungsvorrichtung auf, welche vorzugsweise mit Kühlmittel bzw. Schmiermittel versorgt werden muss, was über das Fluidleitelement eingebracht werden kann. Ist dagegen die Drehmomentübertragungsanordnung mit dem Fluidleitelement ausgestattet, so kann ein Fluid gezielt an den Torsionsschwingungsdämpfer geführt werden.

Dabei ist eine Primärseite des Torsionsschwingungsdämpfers drehfest mit der Abtriebswelle und eine Sekundärseite des Torsionsschwingungsdämpfers drehfest mit einer Eingangsseite der Kupplungsvorrichtung verbunden und das von dem Fluidleitelement in den Bereich radial außerhalb der Abtriebswelle geführte Fluid ist an die Sekundärseite des Torsionsschwingungsdämpfers führbar. Von dort aus kann dann das Fluid direkt an die Federn des Torsionsschwingungsdämpfers geführt werden. Selbstverständlich ist es aber auch möglich, insbesondere bei der Ausgestaltung des Fluidleitelements als Fluiddurchgangskanal durch die Abtriebswelle, wenn der Fluiddurchgangskanal in einen Nabenbereich des Torsionsschwingungsdämpfers mündet. Ein Durchtritt durch eines der Abdeckbleche an Primärseite oder Sekundärseite des Torsionsschwingungsdämpfers wäre dann nicht notwendig.

Gemäß einem weiteren vorteilhaften Ausführungsbeispiel ist zwischen Sekundärseite und Eingangsseite der Kupplungsvorrichtung ein Aufnahmeraum für das von dem Fluidleitelement bereitgestellte Fluid ausgebildet. Dadurch kann das über das Fluidleitelement bereitgestellte Fluid nicht unkontrolliert, beispielsweise in Richtung der nasslaufenden Kupplungsvorrichtung abgeführt werden, sondern steht gezielt für eine Schmierung bzw. Kühlung des Torsionsschwingungsdämpfers zur Verfügung.

Um das Schmierfluid/Kühlfluid gezielt an den Federn des Torsionsschwingungsdämpfers bereitzustellen, ist, vorzugsweise in einem sekundären Führungsblech des Torsionsschwingungsdämpfers, eine Öffnung ausgebildet, über die das Fluid in einen zwischen Primärseite und Sekundärseite ausgebildeten Federraum des Torsionsschwingungsdämpfers führbar ist.

Gemäß einem weiteren vorteilhaften Ausführungsbeispiel ist weiterhin die Abtriebswelle gleichzeitig als Torsionsschwingungsdämpfernabe ausgebildet.

Selbstverständlich ist es auch möglich, Kühl-/Schmierfluid auch an der Primärseite und/oder direkt in dem Nabenbereich des Torsionsschwingungsdämpfers bereitzustellen. Dies ist insbesondere dann vorteilhaft, wenn das Fluidleitelement als Fluiddurchgangskanal ausgebildet ist.

Ein weiterer Aspekt betrifft ein Antriebsmodul, das eine elektrische Maschine und eine oben beschriebene Drehmomentübertragungsanordnung aufweist, um ein Drehmoment von dem Verbrennungsmotor und/oder der elektrischen Maschine auf eine Abtriebseinheit, insbesondere ein Getriebe, einzuleiten.

Weitere Vorteile und vorteilhafte Ausführungsformen sind in den Unteransprüchen, den Zeichnungen und der Beschreibung definiert.

Im Folgenden soll die Erfindung anhand von in den Figuren dargestellten Ausführungsbeispielen näher beschrieben werden. Dabei sind die Ausführungsbeispiele rein exemplarischer Natur und sollen nicht den Schutzbereich der Anmeldung festlegen. Dieser wird allein durch die anhängigen Ansprüche definiert.

Es zeigen:
Fig. 1 eine schematische Schnittdarstellung durch ein Antriebsmodul mit einer erfindungsgemäßen Drehmomentübertragungsanordnung;
Fig. 2 ein erstes bevorzugtes Ausführungsbeispiel des Fluidleitelements in verschiedenen Ansichten;
Fig. 3 eine schematische Schnittansicht durch ein zweites bevorzugtes Ausführungsbeispiel des Fluidleitelements;
Fig. 4 eine schematische Schnittansicht durch ein drittes bevorzugtes Ausführungsbeispiel des Fluidleitelements;
Fig. 5 eine schematische Schnittansicht durch ein viertes bevorzugtes Ausführungsbeispiel des Fluidleitelements.

Im Folgenden werden gleiche oder funktionell gleichwirkende Elemente mit denselben Bezugszeichen gekennzeichnet.

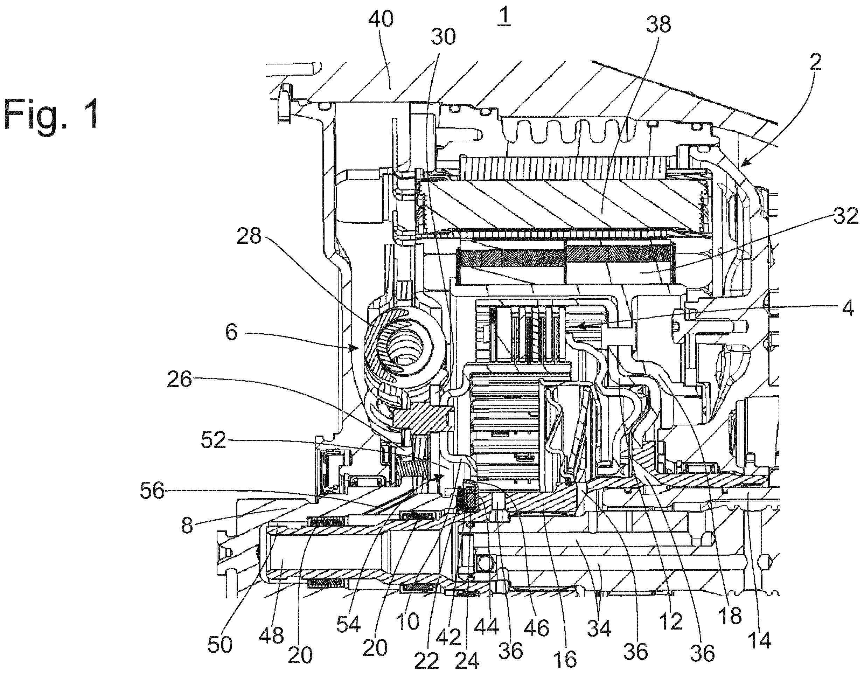

Fig. 1 zeigt eine schematische Schnittansicht durch eine Drehmomentübertragungsanordnung 1 für ein Antriebsmodul für ein Hybridfahrzeug oder ein Elektrofahrzeug, mit einer elektrischen Maschine 2 und einer nasslaufenden Kupplungsvorrichtung 4. Weiterhin ist Fig. 1 zu entnehmen, das neben der Kupplungsvorrichtung 4 ein Torsionsschwingungsdämpfer 6 angeordnet ist, der Schwingungen eines Verbrennungsmotors (nicht dargestellt) ausgleichen soll. Soll ein Drehmoment von dem Verbrennungsmotor auf das Getriebe eingeleitet werden, so wird es über eine mit dem Verbrennungsmotor drehfest verbundene Abtriebswelle 8 über den Torsionsschwingungsdämpfer 6 an eine Eingangsseite 10 der Kupplungsvorrichtung 4 eingeleitet, wobei die Eingangsseite 10 der Kupplungsvorrichtung in dem hier gezeigten Ausführungsbeispiel als Innenlamellenträger ausgebildet ist. Bei geschlossener Kupplungsvorrichtung 4 wird dann das Drehmoment auf die Kupplungsausgangsseite 12 übertragen, die in Fig. 1 als Außenlamellenträger ausgebildet ist. Die Ausgangsseite 12 der Kupplungsvorrichtung 4 ist wiederum drehfest mit einer Antriebswelle 14, insbesondere mit einer Getriebeeingangswelle 14 verbunden.

Um ein Drehmoment von der elektrischen Maschine 2 auf die Getriebeeingangswelle 14 zu übertragen, ist weiterhin eine Rotornabe 16 vorgesehen, die den Außenlamellenträger 12 trägt und über diesen drehfest mit einem Rotorträger 18 verbunden ist. Dabei zeigt Fig. 1 weiterhin, dass die Rotornabe 16 als Hohlwelle ausgebildet ist und einerseits die Getriebewelle 14 umgreift und andererseits über Lager 20 die Abtriebswelle 8 abstützt.

In dem in Fig. 1 dargestellten Ausführungsbeispiel ist die Abtriebswelle 8 gleichzeitig als Nabenwelle für den Torsionsschwingungsdämpfer 6 ausgebildet. Weiterhin kann Fig. 1 entnommen werden, dass sich die Abtriebswelle 8 über eine Abstandsscheibe 22 und ein Lager 24 an der Rotornabe 16 axial abstützt.

Der Torsionsschwingungsdämpfer 6 ist in einem radialen äußeren Bereich der Abtriebswelle 8 angeordnet und mit einem Führungsblech 26 einer Primärseite drehfest mit der Abtriebswelle 8 ausgebildet. Die Primärseite 26 wiederum ist über Torsionsschwingungsdämpferfedern 28 mit einem Führungsblech 30 einer Sekundärseite des Torsionsschwingungsdämpfers 6 verbunden, die wiederum drehfest mit der Eingangsseite 10 der Kupplungsvorrichtung 4 ausgebildet ist.

Zur Betätigung der Kupplungsvorrichtung 4 und zur Kühlung der Kupplungsvorrichtung 4 und der elektrischen Maschine 2, insbesondere des Rotors 32, wird der Getriebeeingangswelle 14 ein Kühl-/Schmierfluid zugeführt. Dazu sind in der Getriebeeingangswelle 14 Fluidführungskanäle 34 vorgesehen. Weiterhin sind an der Getriebeeingangswelle 14 bzw. der Rotornabe 16 Fluidauslasskanäle 36 vorgesehen, über die das Kühl-/Schmierfluid an die Kupplungsvorrichtung 4 zur Betätigung und Kühlung und weiter an den Rotor 32 und den Stator 38 zur Kühlung geführt werden kann. Aufgrund der Rotationsbewegungen der Kupplungsvorrichtung 4 bzw. des Rotors 32 verteilt sich dieses Kühl-/Schmierfluid zwar allgemein innerhalb eines Gehäuses 40 der Drehmomentübertragungsanordnung 1, dieser Fluidnebel reicht jedoch nicht aus, um die Torsionsschwingungsdämpferfedern 28 ausreichend zu schmieren.

Eine ausreichende Schmierung der Federn 28 ist jedoch nötig, um den Verschleiß der Federn 28 bzw. aller Elemente des Torsionsschwingungsdämpfers im Bereich ihrer Berührungsflächen, insbesondere im Bereich der Führungsbleche 26; 30 und der Federn 28 zu verringern. Ein Verschleiß tritt hauptsächlich dadurch auf, dass die Federn 28 an den Führungsblechen 26; 30 der Primärseite bzw. Sekundärseite des Torsionsschwingungsdämpfers 6 abgestützt sind. Eine mangelnde Schmierung dieser Berührungsflächen hat zur Folge, dass zum einen das Dämpfungsverhalten des Torsionsschwingungsdämpfers 6 gemindert wird, insbesondere da die Reibung an den Berührungsflächen erhöht wird, und zum anderen eventuell auftretende Abriebspäne in den Raum der Elektromaschine gelangen können. Dadurch wiederum kann die elektrische Maschine 2 beschädigt werden, zumindest aber ist sie einem höheren Verschleiß unterworfen.

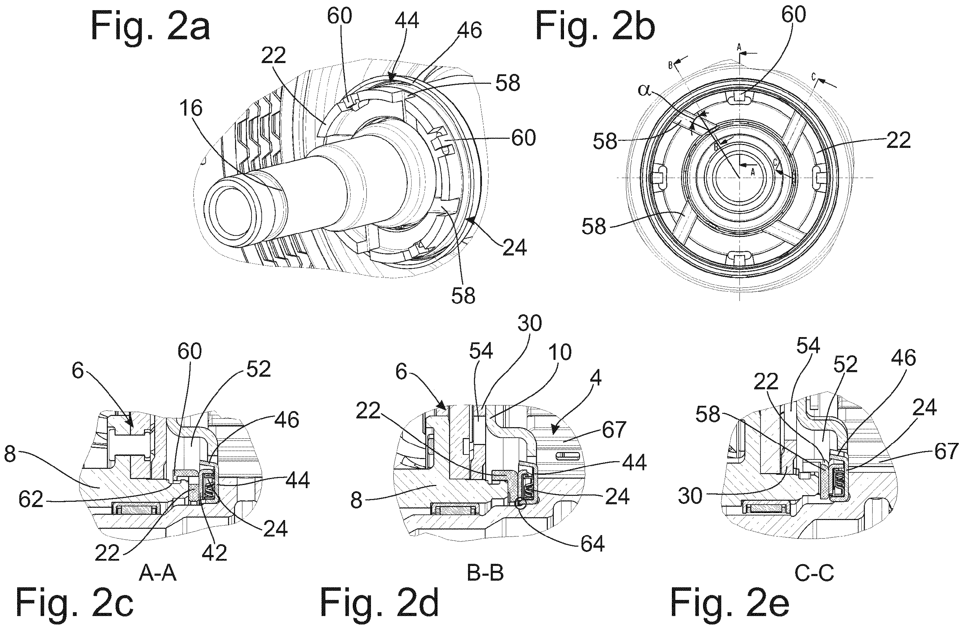

Um eine ausreichende Schmierung des Torsionsschwingungsdämpfers 6 zu erreichen, ist ein Fluidleitelement vorgesehen, das Kühl-/Schmierfluid direkt an den Torsionsschwingungsdämpfer 6 führt. In dem in Fig. 1 dargestellten Ausführungsbeispiel wird dieses Fluidleitelement über die Lageranordnung 24 bzw. die Abstandsscheibe 22 bereitgestellt. Dazu weist die Lageranordnung 24 einen ersten Lagerring 42 und einen zweiten Lagerring 44 auf, wobei der Lagerring 44 in seinem radial äußeren Bereich eine Abkröpfung 46 ausbildet, die Fluid, das durch das Lager 24 strömt, in Richtung des Torsionsschwingungsdämpfers 6 leitet. Auf die speziellen Ausgestaltungen des Fluidleitelements sowie die Fluidführung durch die Abstandsscheibe 22 wird weiter unten mit Bezugnahme auf die Fig. 2 bis 5 noch näher eingegangen werden.

Um das Kühl-/Schmierfluid von den Kanälen 34 der Getriebeeingangswelle 14 in Richtung des Fluidleitelements, in dem hier dargestellten Fall also in Richtung des Lagers 24 bzw. der Abstandsscheibe 22, zu führen, ist weiterhin vorgesehen, die Rotornabe 16 als Hohlwelle auszubilden, die wie auch die Getriebeeingangswelle 14, verbrennungsmotorseitig offen ausgebildet ist, so dass Kühl-/Schmierfluid durch einen Innenraum 48 der Rotornabe 16 geführt werden kann, motorseitig aus der Rotornabe 16 austritt und in einen zwischen Rotornabe 16 und Abtriebswelle 8 ausgebildeten Ringraum 50 geleitet werden kann. In dem Ringraum 50 wird wiederum das Fluid in Richtung Getriebeseite geleitet und schmiert auf diesem Wege die Lager 20, um dann durch das Lager 24 bzw. die Abstandsscheibe 22 in einen zwischen der Eingangsseite 10 der Kupplungsvorrichtung 4 und der Sekundärseite 30 des Torsionsschwingungsdämpfers 6 ausgebildeten Raum 52 zu treten. Aus diesem Aufnahmeraum 52 wird wiederum das Fluid über eine Öffnung 54 in dem Führungsblech 30 der Sekundärseite des Torsionsschwingungsdämpfers 6 ausgebildeten Öffnung 54 in den Innenraum des Torsionsschwingungsdämpfers 6 und von dort aus in Richtung der Federelemente 28 geleitet. Zudem kann das Fluidleitelement auch als ein an der Abtriebswelle 8 ausgebildeter Fluiddurchgangskanal 56 ausgebildet sein, der Fluid aus dem Ringraum 50 direkt an den Torsionsschwingungsdämpfer 6 führt.

Demnach kann das Fluidleitelement unter anderem als Fluiddurchgang 56 durch die Abtriebswelle 8, als Abstandsscheibe 22 und/oder als Lageranordnung 24 ausgebildet sein. Dabei können die verschiedenen Ausgestaltungen allein oder in Kombination vorliegen. Selbstverständlich sind auch andere Ausgestaltungen des Fluidleitelements möglich.

In den nachfolgenden beschriebenen Fig. 2 bis 5 werden verschiedene Ausgestaltungen des Fluidleitelements besprochen, wobei in diesem Ausführungsbeispiel die Fluiddurchführung über die Abstandsscheibe 22 und/oder die Lagervorrichtung 24 erfolgt.

Fig. 2 zeigt das in Fig. 1 dargestellte Ausführungsbeispiel in verschiedenen Detailansichten. Dabei zeigt Fig. 2a eine perspektivische schematische Aufsicht auf die Rotornabe 16 mit daran angeordneter Abstandsscheibe 22 und dem dahinter angeordneten Lager 24. Dabei ist Fig. 2a gut zu entnehmen, dass der zweite Lagerring 44 der Lageranordnung 24 eine in Richtung Motorseite ausgebildete Abkröpfung 46 aufweist, die ein Fluid, das durch die Lageranordnung 24 strömt in Richtung des Torsionsschwingungsdämpfers 6 leitet. Weiterhin ist Fig. 2a zu entnehmen, dass in der Abstandsscheibe 22 Fluiddurchgangsnuten 58 ausgebildet sind, durch die Fluid ebenfalls aus dem Ringraum 50 in den Zwischenraum 52 führbar ist. Auch dieses Fluid wird wiederum über die Abkröpfung 56 in Richtung des Torsionsschwingungsdämpfers 6 geleitet. Fig. 2b zeigt dabei das Ausführungsbeispiel in Aufsicht von Motorseite. Dabei erkennt man, dass die Fluidnuten 58 in der Abstandsscheibe 22 nicht radial ausgebildet sind, sondern hinsichtlich einer radialen Ausrichtung einen Anstellwinkel α aufweisen. Dieser Anstellwinkel α ist dabei derart gewählt, dass bei Drehung der Abtriebswelle und damit auch bei Drehung der Abstandsscheibe 22 ein Fluiddurchgang durch die Fluiddurchgangsnuten 58 besonders gut gewährleistet ist.

Weiterhin ist den Fig. 2a und 2b zu entnehmen, dass die Abstandsscheibe 22 mittels Befestigungselementen 60, die in Form von Schnappnasen ausgebildet sind, an der Abtriebswelle befestigbar ist.

Dazu weist die Abtriebswelle 8, wie den Fig. 2c bis 2e zu entnehmen ist, weiterhin eine Aufnahmenut 62 auf, in die die Schnappnasen 60 einschnappbar sind. Dadurch kann die Abstandsscheibe 22 fest aber lösbar mit der Abtriebswelle 8 verbunden werden. Weiterhin kann man den Schnittansichten der Fig. 2c bis 2e entnehmen, dass der Lagerring 44 der Lageranordnung 24 die in Richtung Torsionsschwingungsdämpfer 6 geneigte Abkröpfung 46 aufweist. Dadurch wird Fluid, das über die Lageranordnung 24 in Richtung des Zwischenraums 52 geführt wird, in Richtung des Torsionsschwingungsdämpfers 6 geleitet. Weiterhin ist insbesondere der Fig. 2d zu entnehmen, dass der Lagerring 44 an seinem radial inneren Bereich eine Fehlmontagesicherung 64 aufweist, die sicherstellt, dass die Lageranordnung 24 korrekt orientiert in der Drehmomentübertragungsanordnung 1 angeordnet ist. Eine Montage um 180° versetzt würde nämlich dazu führen, dass Fluid nicht in Richtung des Torsionsschwingungsdämpfers 6, sondern in Richtung der Eingangsseite der Kupplungsvorrichtung und in einen Innenraum 67 der Kupplungsvorrichtung 4 gelenkt werden würde.

Fig. 2e zeigt weiterhin, dass Fluid nicht nur über die Lageranordnung 24, sondern auch über die Nuten 58 der Abstandsscheibe 22 in den Zwischenraum 52 führbar ist. Auch in diesem Fall sorgt die Abkröpfung 46 dafür, dass das Fluid in Richtung des Torsionsschwingungsdämpfers 6 geleitet wird und nicht in Richtung des Kupplungsvorrichtungsinnenraums 67 abgelenkt wird. Weiterhin zeigen die Fig. 2d und 2e, dass in dem Führungsblech 30 der Sekundärseite des Torsionsschwingungsdämpfers 6 die Öffnung 54 ausgebildet ist, über die das im Aufnahmeraum 52 vorhandene Fluid in Richtung der Torsionsschwingungsdämpferfedern 28 geleitet werden kann, um sie ausreichend mit Schmiermittel zu versorgen.

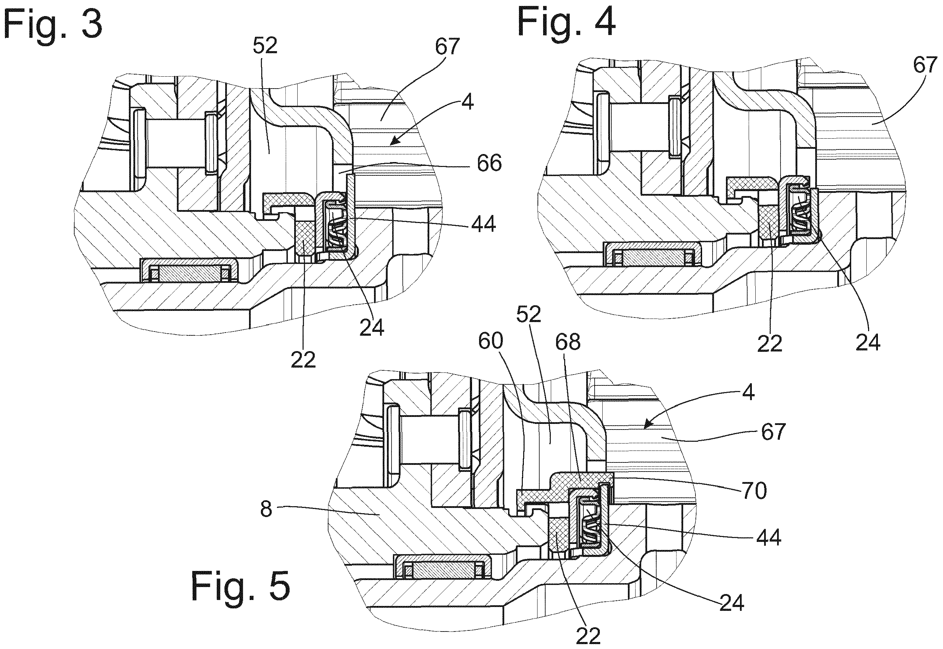

Die Fig. 3, 4 und 5 zeigen weitere besonders bevorzugte Ausführungsbeispiele der Abstandsscheibe 22 bzw. der Lageranordnung 24, wobei nur auf die Unterschiede eingegangen werden wird. Bei dem in Fig. 3 dargestellten Ausführungsbeispiel ist im Gegensatz zu dem in Fig. 2 dargestellten Ausführungsbeispiel der Lagerring 44 nicht mit einer Abkröpfung 46 ausgebildet, sondern weist lediglich eine sich radial nach außen erstreckende Verlängerung auf, die wiederum einen Durchgangsbereich 66 zwischen dem Zwischenraum 52 und dem Innenraum 67 der Kupplungsvorrichtung 4 blockiert, so dass Fluid nur in sehr begrenztem Maße in den Innenraum 67 der Kupplungsvorrichtung 4 gelangen kann. Selbstverständlich ist es aber auch möglich, wie insbesondere Fig. 4 zeigt, auf eine derartige Verlängerung des Lagerrings 44 vollständig zu verzichten. Dabei ist dann insbesondere vorteilhaft, wenn das Fluid großteils über die Abstandsscheibe geführt wird und weniger über die Lagervorrichtung 24. Dies kann beispielsweise über entsprechend dimensionierte Nuten 58 erreicht werden.

Fig. 5 zeigt ein weiteres bevorzugtes Ausführungsbeispiel, bei dem die Abstandsscheibe 22 nicht nur Schnappnasen 60 zur Befestigung an der Abtriebswelle 8 aufweist, sondern gleichzeitig sich in Richtung Getriebe über die Lageranordnung 24 axial erstreckt. Am Ende dieser axialen Erstreckung 68 ist wiederum eine Schnappnase 70 vorgesehen, die mit dem Außenring 44 der Lageranordnung 24 zusammenwirkt. Dies hat den Vorteil, dass zum einen auch die Lageranordnung 24 während der Montage bereits an der Abtriebswelle 8 befestigt werden kann und zum anderen kann über die axiale Erstreckung 68 der Fluiddurchgang 66 zwischen Zwischenraum 52 und Innenraum der Kupplungsanordnung 4 verkleinert werden. In diesem Ausführungsbeispiel wird das Fluid hauptsächlich über die in der Abstandsscheibe 22 ausgebildeten Nuten 58 in den Zwischenraum 52 transportiert. Ein Fluiddurchgang durch die Lageranordnung 24 ist dagegen nur begrenzt möglich.

Es wird durch die vorliegende Erfindung eine Drehmomentübertragungsanordnung 1 zur Übertragung eines Drehmoments von einer Abtriebswelle 8 auf eine Antriebswelle 14 offenbart, wobei die Antriebswelle 14 einen Fluidführungskanal 34 aufweist, in dem ein Fluid in Richtung Abtriebswelle 8 führbar ist und wobei an der Abtriebswelle 8 ein Fluidleitelement 22; 24; 56 vorgesehen ist, das Fluid aus dem Fluidführungskanal 34 der Antriebswelle 14 in einen radial äußeren Bereich der Abtriebswelle 8 führt und wobei die Drehmomentübertragungsvorrichtung 1 in dem genannten radial äußeren Bereich der Abtriebswelle 8 einen Torsionsschwingungsdämpfer 6 aufweist und wobei weiter das von dem Fluidleitelement 22; 24; 56 aus dem Fluidführungskanal 34 der Antriebswelle 14 in den radial äußeren Bereich der Abtriebswelle 8 geführte Fluid in einen Innenraum, insbesondere in einen Federraum, des Torsionsschwingungsdämpfers 6 mit Dämpferfedern 28 führbar ist.

Mit anderen Worten sind also der Torsionsschwingungsdämpfer 6 und das Fluidleitelement 22; 24; 56 im Wesentlichen in demselben Axialbereich der Abtriebswelle 8 angeordnet, so dass ein Kühl-/Schmierfluid direkt, das heißt auf einem möglichst kurzem Weg zu dessen Bestimmungsort geführt werden kann. Dazu kann eine Abstandsscheibe 22 und/oder ein Lager 24 derart ausgebildet sein, dass Fluid direkt in einen Außenbereich der Kupplungsanordnung 4 und damit direkt an den Torsionsschwingungsdämpfer 6 führbar ist. Alternativ oder zusätzlich kann auch die Abtriebswelle mit einem Fluidleitkanal ausgestattet sein. Insgesamt kann dadurch eine verbesserte Fluidführung durch eine Drehmomentübertragungsanordnung bereitgestellt werden, ohne Bauraum oder Kosten übermäßig zu erhöhen.

### Bezugszeichen

- 1: Drehmomentübertragungsanordnung
- 2: elektrische Maschine
- 4: Kupplungsvorrichtung
- 6: Torsionsschwingungsdämpfer
- 8: Abtriebswelle
- 10: Eingangsseite der Kupplung
- 12: Ausgangsseite der Kupplung
- 14: Getriebeeingangswelle
- 16: Rotornabe
- 18: Rotorträger
- 20: Lager
- 22: Abstandsscheibe
- 24: Lageranordnung
- 26: Torsionsschwingungsdämpfereingangsseite
- 28: Torsionsschwingungsdämpferfeder
- 30: Torsionsschwingungsdämpfersekundärseite
- 32: Rotor
- 34: Fluiddurchleitkanäle
- 36: Öffnungen
- 38: Stator
- 40: Gehäuse
- 42: erster Lagerring
- 44: zweiter Lagerring
- 46: Abkröpfung
- 48: Innenraum der Rotornabe
- 50: Ringraum
- 52: Zwischenraum
- 54: Öffnung
- 56: Fluiddurchgangskanal
- 58: Fluiddurchgangsnut
- 60: Befestigungsmittel Schnappnase
- 62: Schnappnut
- 64: Fehlmontagesicherung
- 66: Verbindungsöffnung
- 67: Innenraum der Kupplungsvorrichtung
- 68: axiale Erstreckung
- 70: Schnappnase

## Patentansprüche

1. Drehmomentübertragungsanordnung (1) für eine Anordnung mit einer elektrischen Maschine in einem Antriebsmodul eines Hybridfahrzeugs oder Elektrofahrzeugs, zur Übertragung eines Drehmoments von einer Abtriebswelle (8), insbesondere einer Motorabtriebswelle, auf eine Antriebswelle (14), insbesondere eine Getriebeeingangswelle, wobei
- die Antriebswelle (14) weiterhin mindestens einen Fluidführungskanal (34) aufweist, in dem ein Fluid in Richtung Abtriebswelle (8) führbar ist und wobei
- die Drehmomentübertragungsvorrichtung (1) in einem Bereich radial außerhalb der Abtriebswelle (8) einen Torsionsschwingungsdämpfer (6) aufweist, **dadurch gekennzeichnet,**
- **dass** an der Abtriebswelle (8) ein Fluidleitelement (22; 24; 56) vorgesehen ist, das Fluid aus dem Fluidführungskanal (34) der Antriebswelle (14) in den Bereich radial außerhalb der Abtriebswelle (8) führt und
- **dass** das von dem Fluidleitelement (22; 24; 56) aus dem Fluidführungskanal (34) der Antriebswelle (14) in den Bereich radial außerhalb der Abtriebswelle (8) geführte Fluid in einen Innenraum des Torsionsschwingungsdämpfers (6), insbesondere in einen Federraum mit Dämpferfedern (28) führbar ist.

2. Drehmomentübertragungsanordnung (1) nach Anspruch 1, wobei die Abtriebswelle (8) als Hohlwelle ausgebildet ist und ein Innenraum (50) der Abtriebswelle (8) dazu ausgelegt ist, das Fluid aufzunehmen und/oder zu führen.

3. Drehmomentübertragungsanordnung (1) nach Anspruch 2, wobei die Antriebswelle (14) weiterhin von mindestens einer weiteren als Hohlwelle ausgebildeten Welle (16), insbesondere eine Rotornabe, umgeben ist, wobei vorzugsweise sich die weitere Welle (16) derart in die als Hohlwelle ausgebildete Abtriebswelle (8) erstreckt, dass der fluidaufnehmende Innenraum (50) der Abtriebswelle (8) als Ringraum zwischen Abtriebswelle (8) und der weiteren Welle (16) ausgebildet ist, wobei insbesondere ein Innenraum (48) der weiteren Welle (16) in fluidischer Verbindung zu dem Fluidführungskanal (34) der Antriebswelle (14) und dem fluidaufnehmenden Innenraum (50) der Abtriebswelle (8) steht.

4. Drehmomentübertragungsanordnung (1) nach Anspruch 2 oder 3, wobei das Fluidleitelement (22; 24; 56) als Fluiddurchgangskanal (56) durch die Abtriebswelle (8) ausgebildet ist, wobei der Fluiddurchgangskanal (56) den fluidaufnehmenden Innenraum (50) der Abtriebswelle (8) mit dem Bereich radial außerhalb der Abtriebswelle (8) fluidisch verbindet.

5. Drehmomentübertragungsanordnung (1) nach einem der vorhergehenden Ansprüche, wobei an einem abtriebsseitigen Ende der Abtriebswelle (8) eine im Wesentlichen radial angeordnete Lageranordnung (24) mit einem ersten (42) und einem zweiten (44) sich im Wesentlichen radial erstreckenden Lagerring angeordnet ist, wobei der erste Lagerring (42) drehfest mit der Abtriebswelle (8) verbunden ist und der zweite Lagerring (44) drehfest mit einem sich nicht mit der Abtriebswelle (8) drehenden Element der Drehmomentübertragungsanordnung (1), verbindbar ist.

6. Drehmomentübertragungsanordnung (1) nach Anspruch 5, wobei zumindest einer der Lagerringe (42; 44) als Fluidleitelement ausgebildet ist, wobei der als Fluidleitelement ausgebildete Lagerring (42; 44) sich radial nach außen über die Lageranordnung hinaus erstreckt, wobei vorzugsweise der Lagerring (44) in seinem radial außen angeordneten Bereich eine Abkröpfung (46) aufweist, die das durch die Lageranordnung (24) strömende Fluid in Richtung des Bereichs radial außerhalb der Abtriebswelle (8) leitet.

7. Drehmomentübertragungsanordnung (1) nach Anspruch 5 oder 6, wobei an der Lageranordnung (24), insbesondere an mindestens einem der Lagerringe (42; 44) eine, vorzugsweise radial innen angeordnete, Fehlmontagesicherung (64) ausgebildet ist.

8. Drehmomentübertragungsanordnung (1) nach einem der Ansprüche 5 bis 7, wobei zwischen Lageranordnung (24) und Abtriebswelle (8) eine Abstandsscheibe (22) angeordnet ist.

9. Drehmomentübertragungsanordnung (1) nach Anspruch 8, wobei die Abstandsscheibe (22) mindestens eine Fluidführungsnut (58) aufweist, die derart angeordnet ist, dass eine fluidische Verbindung zwischen dem fluidaufnehmenden Innenraum (50) der Abtriebswelle (8) und dem Bereich radial außerhalb der Abtriebswelle (8) bereitgestellt ist.

10. Drehmomentübertragungsanordnung (1) nach Anspruch 9, wobei die Führungsnut (58) hinsichtlich einer radialen Ausrichtung in einem Winkel α angestellt ist.

11. Drehmomentübertragungsanordnung (1) nach Anspruch 9 oder 10, wobei die Abstandsscheibe (22) sich axial zumindest teilweise über die Abtriebswelle (8) erstreckt und/oder sich die Abstandscheibe (22) axial zumindest teilweise über die Lageranordnung (24) erstreckt, wobei vorzugsweise die axiale Erstreckung als Befestigungsmittel (60; 70), insbesondere als Schnappelement, zur Befestigung der Abstandsscheibe (22) an der Abtriebswelle (8) und/oder der Lageranordnung (24) ausgebildet ist.

12. Drehmomentübertragungsanordnung (1) nach einem der vorhergehenden Ansprüche, wobei die Drehmomentübertragungsvorrichtung (1) in dem Bereich radial außerhalb der Abtriebswelle (8) mindestens eine vorzugsweise nasslaufende Kupplungsvorrichtung (4) aufweist, wobei eine Primärseite (26) des Torsionsschwingungsdämpfers (6) drehfest mit der Abtriebswelle (8) und eine Sekundärseite (30) des Torsionsschwingungsdämpfer (6) drehfest mit einer Eingangsseite (10) der Kupplungsvorrichtung (4) verbunden ist.

13. Drehmomentübertragungsvorrichtung (1) nach Anspruch 12, wobei das von dem Fluidleitelement (22; 24; 56) aus dem Fluidführungskanal (34) der Antriebswelle (14) in den Bereich radial außerhalb der Abtriebswelle (8) geführte Fluid an die Sekundärseite des Torsionsschwingungsdämpfers (6) führbar ist.

14. Drehmomentübertragungsanordnung (1) nach Anspruch 12 oder 13, wobei zwischen Sekundärseite (30) und Eingangsseite (10) der Kupplungsvorrichtung (4) ein Aufnahmeraum (52) für das von dem Fluidleitelement (22; 24; 56) bereitgestellten Fluid ausgebildet ist.

15. Drehmomentübertragungsanordnung (1) nach einem der Ansprüche 11 bis 14, wobei das Fluid über eine in der Sekundärseite (30), insbesondere in einem sekundären Führungsblech des Torsionsschwingungsdämpfers (6), ausgebildete Öffnung (54) in einen zwischen Primärseite (26) und Sekundärseite (30) ausgebildeten Federraum des Torsionsschwingungsdämpfers (6) führbar ist.

16. Antriebsmodul mit einer elektrischen Maschine (2) und einer Drehmomentübertragungsanordnung (1) gemäß einem der vorhergehenden Ansprüche, die dazu ausgelegt ist, ein Drehmoment von einem Verbrennungsmotor und/oder der elektrischen Maschine (2) an eine Abtriebseinheit, insbesondere ein Getriebe, zu leiten.

## Claims

1. Torque transmission arrangement (1) for an arrangement with an electric machine in a drive module of a hybrid vehicle or electric vehicle, for the transmission of a torque from an output shaft (8), in particular a motor output shaft, to a drive shaft (14), in particular a transmission input shaft,
- the drive shaft (14) having, furthermore, at least one fluid conducting duct (34), in which a fluid can be conducted in the direction of the output shaft (8), and
- the torque transmission apparatus (1) having a torsional vibration damper (6) in a region radially outside the output shaft (8),
**characterized**
- **in that** a fluid conducting element (22; 24; 56) is provided on the output shaft (8), which fluid conducting element (22; 24; 56) conducts fluid from the fluid conducting duct (34) of the drive shaft (14) into the region radially outside the output shaft (8), and
- **in that** the fluid which is conducted by the fluid conducting element (22; 24; 56) from the fluid conducting duct (34) of the drive shaft (14) into the region radially outside the output shaft (8) can be conducted into an interior space of the torsional vibration damper (6), in particular into a spring space with damper springs (28).

2. Torque transmission arrangement (1) according to Claim 1, the output shaft (8) being configured as a hollow shaft, and an interior space (50) of the output shaft (8) being designed to receive and/or to conduct the fluid.

3. Torque transmission arrangement (1) according to Claim 2, the output shaft (14) being surrounded, furthermore, by at least one further shaft (16), in particular a rotor hub, which is configured as a hollow shaft, the further shaft (16) preferably extending into the output shaft (8) which is configured as a hollow shaft, in such a way that the fluid-receiving interior space (50) of the output shaft (8) is configured as an annular space between the output shaft (8) and the further shaft (16), an interior space (48) of the further shaft (16), in particular, being connected fluidically to the fluid conducting duct (34) of the drive shaft (14) and the fluid-receiving interior space (50) of the output shaft (8).

4. Torque transmission arrangement (1) according to Claim 2 or 3, the fluid conducting element (22; 24; 56) being configured as a fluid passage duct (56) through the output shaft (8), the fluid passage duct (56) connecting the fluid-receiving interior space (50) of the output shaft (8) fluidically to the region radially outside the output shaft (8).

5. Torque transmission arrangement (1) according to one of the preceding claims, a substantially radially arranged bearing arrangement (24) with a first (42) and a second (44) substantially radially extending bearing ring being arranged at an output-side end of the output shaft (8), the first bearing ring (42) being connected fixedly to the output shaft (8) so as to rotate with it, and it being possible for the second bearing ring (44) to be connected for conjoint rotation to an element of the torque transmission arrangement (1), which element does not rotate with the output shaft (8).

6. Torque transmission arrangement (1) according to Claim 5, at least one of the bearing rings (42; 44) being configured as a fluid conducting element, the bearing ring (42; 44) which is configured as a fluid conducting element extending radially outwards beyond the bearing arrangement, the bearing ring (44) preferably having, in its radially outwardly arranged region, an angled-off section (46) which conducts the fluid which flows through the bearing arrangement (24) in the direction of the region radially outside the output shaft (8).

7. Torque transmission arrangement (1) according to Claim 5 or 6, a securing means (64) against incorrect assembly which is preferably arranged in a radially inward manner being configured on the bearing arrangement (24), in particular on at least one of the bearing rings (42; 44).

8. Torque transmission arrangement (1) according to one of Claims 5 to 7, a spacer disc (22) being arranged between the bearing arrangement (24) and the output shaft (8) .

9. Torque transmission arrangement (1) according to Claim 8, the spacer disc (22) having at least one fluid conducting groove (58) which is arranged in such a way that a fluidic connection is provided between the fluid-receiving interior space (50) of the output shaft (8) and the region radially outside the output shaft (8).

10. Torque transmission arrangement (1) according to Claim 9, the guide groove (58) being set at an angle α with regard to a radial orientation.

11. Torque transmission arrangement (1) according to Claim 9 or 10, the spacer disc (22) extending axially at least partially over the output shaft (8) and/or the spacer disc (22) extending axially at least partially over the bearing arrangement (24), the axial extent preferably being configured as a fastening means (60; 70), in particular as a snap-action element, for fastening the spacer disc (22) to the output shaft (8) and/or to the bearing arrangement (24).

12. Torque transmission arrangement (1) according to one of the preceding claims, the torque transmission apparatus (1) having at least one preferably wet-running clutch apparatus (4) in the region radially outside the output shaft (8), a primary side (26) of the torsional vibration damper (6) being connected fixedly to the output shaft (8) so as to rotate with it, and a secondary side (30) of the torsional vibration damper (6) being connected fixedly to an input side (10) of the clutch apparatus (4) so as to rotate with it.

13. Torque transmission apparatus (1) according to Claim 12, it being possible for the fluid which is conducted by the fluid conducting element (22; 24; 56) from the fluid conducting duct (34) of the drive shaft (14) into the region radially outside the output shaft (8) to be conducted to the secondary side of the torsional vibration damper (6).

14. Torque transmission arrangement (1) according to Claim 12 or 13, a receiving space (52) for the fluid which is provided by the fluid conducting element (22; 24; 56) being configured between the secondary side (30) and the input side (10) of the clutch apparatus (4).

15. Torque transmission arrangement (1) according to one of Claims 11 to 14, it being possible for the fluid to be conducted via an opening (54) which is configured in the secondary side (30), in particular in a secondary guide plate of the torsional vibration damper (6), into a spring space of the torsional vibration damper (6), which spring space is configured between the primary side (26) and the secondary side (30).

16. Drive module with an electric machine (2) and a torque transmission arrangement (1) according to one of the preceding claims which is designed to conduct a torque from an internal combustion engine and/or the electric machine (2) to a drive unit, in particular a transmission.

## Revendications

1. Ensemble de transmission de couple (1) pour un ensemble comprenant un moteur électrique dans un module d'entraînement d'un véhicule hybride ou d'un véhicule électrique, pour la transmission d'un couple d'un arbre de sortie (8), en particulier d'un arbre de sortie de moteur, à un arbre d'entraînement (14), en particulier un arbre d'entrée de boîte de vitesses, dans lequel
- l'arbre d'entraînement (14) comprend en outre au moins un canal de guidage de fluide (34) dans lequel un fluide peut être guidé en direction de l'arbre de sortie (8) et dans lequel
- le dispositif de transmission de couple (1) comprend un amortisseur de vibrations de torsion (6) dans une région radialement à l'extérieur de l'arbre de sortie (8), **caractérisé**
- **en ce qu'**un élément conducteur de fluide (22 ; 24 ; 56) est prévu sur l'arbre de sortie (8), lequel guide du fluide à partir du canal de guidage de fluide (34) de l'arbre d'entraînement (14) dans la région radialement à l'extérieur de l'arbre de sortie (8) et
- **en ce que** le fluide guidé par l'élément conducteur de fluide (22 ; 24 ; 56) à partir du canal de guidage de fluide (34) de l'arbre d'entraînement (14) dans la région radialement à l'extérieur de l'arbre de sortie (8) peut être guidé dans un espace intérieur de l'amortisseur de vibrations de torsion (6), en particulier dans un espace de ressorts doté de ressorts d'amortisseur (28).

2. Ensemble de transmission de couple (1) selon la revendication 1, dans lequel l'arbre de sortie (8) est réalisé sous forme d'arbre creux et un espace intérieur (50) de l'arbre de sortie (8) est conçu pour recevoir et/ou pour guider le fluide.

3. Ensemble de transmission de couple (1) selon la revendication 2, dans lequel l'arbre d'entraînement (14) est entouré en outre par au moins un autre arbre (16) réalisé sous forme d'arbre creux, en particulier un moyeu de rotor, dans lequel l'autre arbre (16) s'étend de préférence dans l'arbre de sortie (8) réalisé sous forme d'arbre creux, de telle sorte que l'espace intérieur (50), recevant du fluide, de l'arbre de sortie (8) est réalisé sous forme d'espace annulaire entre l'arbre de sortie (8) et l'autre arbre (16), dans lequel en particulier un espace intérieur (48) de l'autre arbre (16) est en liaison fluidique par rapport au canal de guidage de fluide (34) de l'arbre d'entraînement (14) et à l'espace intérieur (50), recevant du fluide, de l'arbre de sortie (8) .

4. Ensemble de transmission de couple (1) selon la revendication 2 ou 3, dans lequel l'élément conducteur de fluide (22 ; 24 ; 56) est réalisé sous forme de canal de passage de fluide (56) à travers l'arbre de sortie (8), dans lequel le canal de passage de fluide (56) relie fluidiquement l'espace intérieur (50), recevant du fluide, de l'arbre de sortie (8) à la région radialement à l'extérieur de l'arbre de sortie (8).

5. Ensemble de transmission de couple (1) selon l'une des revendications précédentes, dans lequel un ensemble palier (24) disposé sensiblement radialement et doté d'une première (42) et d'une deuxième (44) bague de palier s'étendant sensiblement radialement est disposé à une extrémité côté sortie de l'arbre de sortie (8), dans lequel la première bague de palier (42) est reliée de manière solidaire en rotation à l'arbre de sortie (8) et la deuxième bague de palier (44) peut être reliée de manière solidaire en rotation à un élément de l'ensemble de transmission de couple (1), lequel élément ne tourne pas avec l'arbre de sortie (8).

6. Ensemble de transmission de couple (1) selon la revendication 5, dans lequel au moins l'une des bagues de palier (42 ; 44) est réalisée sous forme d'élément conducteur de fluide, dans lequel la bague de palier (42 ; 44) réalisée sous forme d'élément conducteur de fluide s'étend radialement vers l'extérieur au-delà de l'ensemble palier, dans lequel de préférence la bague de palier (44) comprend une partie coudée (46) dans sa région disposée radialement à l'extérieur, laquelle partie coudée conduit le fluide s'écoulant à travers l'ensemble palier (24) en direction de la région radialement à l'extérieur de l'arbre de sortie (8).

7. Ensemble de transmission de couple (1) selon la revendication 5 ou 6, dans lequel une protection contre un montage incorrect (64) disposée de préférence radialement à l'intérieur est réalisée au niveau de l'ensemble palier (24), en particulier au niveau d'au moins l'une des bagues de palier (42 ; 44).

8. Ensemble de transmission de couple (1) selon l'une des revendications 5 à 7, dans lequel un disque d'espacement (22) est disposé entre l'ensemble palier (24) et l'arbre de sortie (8).

9. Ensemble de transmission de couple (1) selon la revendication 8, dans lequel le disque d'espacement (22) comprend au moins une rainure de guidage de fluide (58) qui est disposée de telle sorte qu'une liaison fluidique est produite entre l'espace intérieur (50), recevant du fluide, de l'arbre de sortie (8) et la région radialement à l'extérieur de l'arbre de sortie (8).

10. Ensemble de transmission de couple (1) selon la revendication 9, dans lequel la rainure de guidage (58) est agencée suivant un angle α par rapport à une orientation radiale.

11. Ensemble de transmission de couple (1) selon la revendication 9 ou 10, dans lequel le disque d'espacement (22) s'étend axialement au moins partiellement sur l'arbre de sortie (8) et/ou le disque d'espacement (22) s'étend axialement au moins partiellement sur l'ensemble palier (24), dans lequel de préférence l'étendue axiale est réalisée sous forme de moyen de fixation (60 ; 70), en particulier sous forme d'élément d'encliquetage, pour la fixation du disque d'espacement (22) à l'arbre de sortie (8) et/ou à l'ensemble palier (24).

12. Ensemble de transmission de couple (1) selon l'une des revendications précédentes, dans lequel le dispositif de transmission de couple (1) comprend au moins un dispositif d'embrayage (4) de préférence humide dans la région radialement à l'extérieur de l'arbre de sortie (8), dans lequel un côté primaire (26) de l'amortisseur de vibrations de torsion (6) est relié de manière solidaire en rotation à l'arbre de sortie (8) et un côté secondaire (30) de l'amortisseur de vibrations de torsion (6) est relié de manière solidaire en rotation à un côté d'entrée (10) du dispositif d'embrayage (4).

13. Dispositif de transmission de couple (1) selon la revendication 12, dans lequel le fluide guidé par l'élément conducteur de fluide (22 ; 24 ; 56) à partir du canal de guidage de fluide (34) de l'arbre d'entraînement (14) dans la région radialement à l'extérieur de l'arbre de sortie (8) peut être guidé jusqu'au côté secondaire de l'amortisseur de vibrations de torsion (6).

14. Ensemble de transmission de couple (1) selon la revendication 12 ou 13, dans lequel un espace de réception (52) pour le fluide fourni par l'élément conducteur de fluide (22 ; 24 ; 56) est réalisé entre le côté secondaire (30) et le côté d'entrée (10) du dispositif d'embrayage (4).

15. Ensemble de transmission de couple (1) selon l'une des revendications 11 à 14, dans lequel le fluide peut être guidé dans un espace de ressorts, réalisé entre le côté primaire (26) et le côté secondaire (30), de l'amortisseur de vibrations de torsion (6), via une ouverture (54) réalisée dans le côté secondaire (30), en particulier dans une tôle de guidage secondaire de l'amortisseur de vibrations de torsion (6).

16. Module d'entraînement comportant un moteur électrique (2) et un ensemble de transmission de couple (1) selon l'une des revendications précédentes, qui est conçu pour conduire un couple d'un moteur à combustion interne et/ou du moteur électrique (2) à une unité de sortie, en particulier à une boîte de vitesses.
